# EUROPEAN PATENT SPECIFICATION

(11) **EP 0 887 786 B1**
(45) Date of publication and mention of the grant of the patent: **04.09.2002**
(21) Application number: 98401566.9
(22) Date of filing: 25.06.1998
(51) Int. Cl.: G09G 3/36

(54) **Image display apparatus using an optical spatal modulation device**
Anzeigegerät mit einem optischen räumlichen Modulator
Dispositif d'affichage comportant un modulateur spatial optique

(30) Priority: 25.06.1997 JP 16919597; 07.04.1998 JP 9487798
(43) Date of publication of application: 30.12.1998
(73) Proprietor: SONY CORPORATION, Tokyo (JP)
(72) Inventor: Akimoto, Osamu, Shinagawa-ku, Tokyo (JP)
(74) Representative: Thévenet, Jean-Bruno

(56) References cited:
- EP-A- 0 435 701
- EP-A- 0 660 297
- EP-A- 0 689 181
- WO-A-97/04436
- US-A- 5 534 884

## Description

### BACKGROUND OF THE INVENTION

The present invention relates to a reflection type optical spatial modulation device for modulating radiated light in accordance with information representing an image to be displayed for each pixel and an image display apparatus employing the optical spatial modulation device.

A liquid crystal display device is known as an optical spatial modulation device for modulating radiated light in accordance with information representing an image to be displayed for each pixel. There has been widely used an ordinary liquid crystal display device of a type wherein the intensity of light is modulated by putting an array of so-called twisted nematic liquid crystals, that is, liquid crystals used in a twisted nematic operating mode, in continuously varying states. A twisted nematic liquid crystal is referred to hereafter simply as a TN liquid crystal.

With regard to such liquid crystal materials and liquid crystal display devices, there have been published an article with a title "New Technology Seen from Patent Information: 13 Liquid Crystal," authored by Yoko Watanabe, Pages 26 to 31, Volume 92, a July 1995 issue of "Inventions", a monthly magazine published by Japan Institute of Invention and Innovation, an article with a title "New Technology Seen from Patent Information: 26 Liquid Crystal Display Device," authored by Takashi Hinatsu, Pages 62 to 69, Volume 92, an August 1996 issue of "Inventions", a monthly magazine published by Japan Institute of Invention and Innovation and a book with a title "Liquid Crystal Device Handbook," issued by the 142nd Committee of the Japan Society for the Promotion of Science and published by the Nikkan Kongyo Newspaper.

However, the TN liquid crystal has a problem of a slow response speed, making it desirable to develop an optical spatial modulation device that is capable of operating at a high speed. As a liquid crystal material for light modulation that is capable of operating at a high speed, for example, there are a ferroelectric liquid crystal referred to hereafter as an FLC and a non-ferroelectric inductive liquid crystal. An FLC has a state storing characteristic. In general, as a state, there may be only 2 values. Thus, with an optical spatial modulation device using such a material for light modulation, continuous light modulation can not be carried out. That is to say, such a device is capable of operating by merely changing from an on state to an off state or vice versa.

In addition, as a liquid crystal material for light modulation having a state storing characteristic, there are also a cholesteric liquid crystal or a kailar nematic liquid crystal operating in a phase transition mode and a polymer liquid crystal which carries out write and erase operations between isotropic and glass phases. Other liquid crystal materials that can be used as a material for light modulation include a polymer diffusion liquid crystal which is referred to hereafter as a PDLC.

When displaying a multi-tone image by means of an optical spatial modulation device using such a material for light modulation, a pulse width modulation (PWM) technique is typically adopted in order to make use of an afterglow characteristic of the human eye. To put it in detail, when displaying a multi-tone image by means of such an optical spatial modulation device, light is switched from an on state to an off state and vice versa at a high speed with controlled timing so that the multi-tone image is displayed and projected on a human eye.

The following is a description of an image display apparatus employing such an optical spatial modulation device.

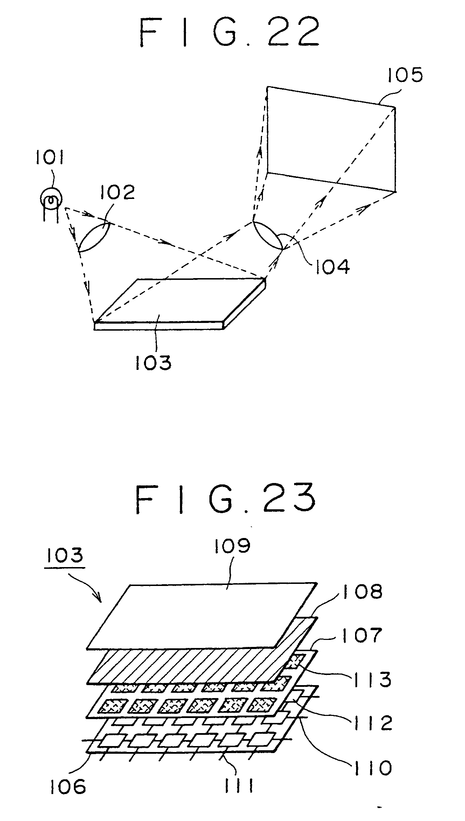

Fig. 22 is a conceptual diagram showing the image display apparatus. As shown in the figure, a light generated by a light source 101 is radiated to an optical spatial modulation device 103 by a radiation optical system 102. The light modulated by the optical spatial modulation device 103 is then projected on a screen 105 by a projection optical system 104. As a result, an image is displayed on the screen 105.

Fig. 23 is a diagram showing a squint view of disassembled components of an enlarged portion of the optical spatial modulation device 103 mentioned above. As shown in the figure, the optical spatial modulation device 103 comprises a driving layer 106, a reflection layer 107, a modulation layer 108 and a common electrode 109. It should be noted that, if the modulation layer 108 is implemented by a crystal, an orientation layer is provided between the common electrode 109 and the crystal and another orientation layer is provided between the crystal and the reflection layer 107.

In an operation to drive this optical spatial modulation device 103, first of all, data coming from a data line 111 is written into each memory cell 112 at a point of intersection of a scanning line 110 and the data line 111 created on the driving layer 106. Each of the memory cells 112 corresponds to a pixel.

Next, electric fields are applied to the electrically charged modulation layer 108 provided between reflection pads 113 created on the reflection layer 107 and the common electrode 109 in accordance with pieces of data recorded in the memory cells 112 so as to reflect the respective pixels. The modulation layer is implemented typically by an FLC. As a result, areas of the modulation layer 108 are put in either a light passing state or a light shielding state in dependence on pixels facing the areas.

Then, some of the light radiated to the optical spatial modulation device 103 passing through the modulation layer 108 is reflected by the reflection pads 113 on the reflection layer 107 and output by way of the reflection layer 108 as shown in Fig. 22. That is to say, only some of the light radiated to the optical spatial modulation device 103 that manages to pass through the modulation layer 108 is reflected. As a result, light is modulated for each pixel.

In order to continuously change a displayed image in this image display apparatus, the radiation of a light from the light source 101 is halted each time the image is changed and then the state of the modulation layer 108 is changed with respect to all the pixels. Then, at a point of time the operation to change the state of the modulation layer 108 with respect to all the pixels is completed, the radiation of the light from the light source 101 is resumed. As a result, lights modulated for the pixels are sequentially projected on the screen 105. Thus, while the state of the modulation layer 108 of the optical spatial modulation device 103 employed in the image display apparatus is being changed, the light source 101 is turned off. As the operation to change the state of the modulation layer 108 is completed, a light is radiated from the light source 101 to the optical spatial modulation device 103.

It should be noted that, since the FLC normally has a state storing characteristic, once an electric field is applied to put the FLC in a desired state, residual electric charge remains in the FLC. It is thus necessary to apply an electric field to the FLC in the opposite direction in order to neutralize the residual electric charge. As a technique for neutralizing residual electric charge, among other methods, a 2-field technique is known. In the 2-field technique, pieces of pixel data of a desired image are written into the memory cells 112 in order to apply electric fields to the modulation layer 108 in accordance with the pieces of pixel data to display the desired image. Then, pieces of pixel data for inverting the pieces of pixel data of the displayed image are written into the memory cells 112 in order to apply electric fields to the modulation layer 108 in accordance with the pieces of pixel data newly written into the memory cells 112. That is to say, according to this 2-field technique, residual electric charge is neutralized by alternately applying electric fields to the modulation layer 108 in opposite directions for a display of 1 picture.

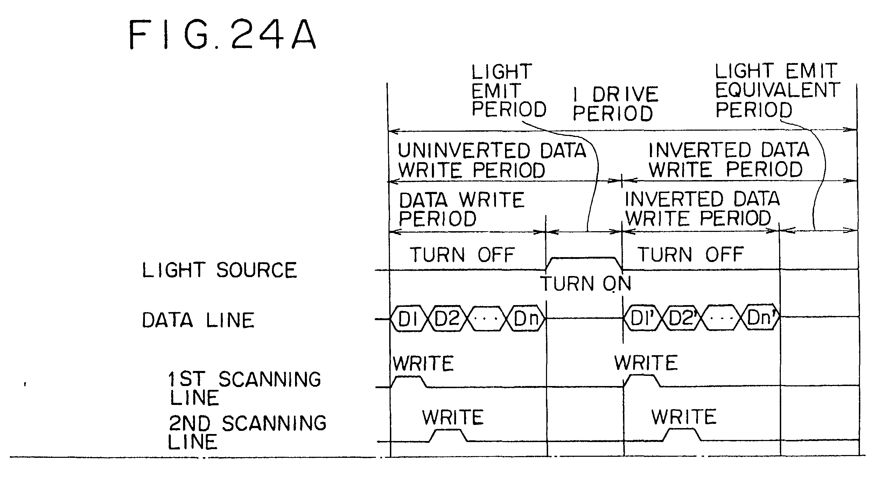

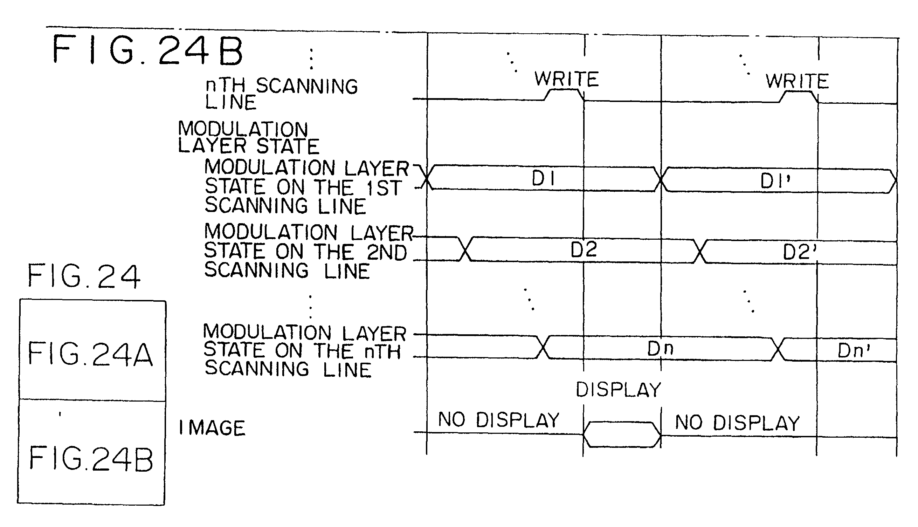

The image display apparatus like the one described above is further explained by referring to timing charts shown in Fig. 24. In the example shown in the figure, the 2-field technique is adopted. In this case, the number of scanning lines 110 is n.

As shown in Fig. 24, a period of time required for displaying 1 screen comprises an uninverted data write period and an inverted data write period. During the uninverted data write period, pieces of pixel data of a desired image are written into the memory cells 112 in order to apply electric fields to the modulation layer 108 in accordance with the pieces of pixel data to display the desired image. During the inverted data write period, on the other hand, pieces of pixel data for neutralizing the pieces of pixel data of the displayed image are written into the memory cells 112 in order to apply electric fields to the modulation layer 108 in a direction opposite to the electric fields applied during the uninverted data write period.

The uninverted data write period comprises a data write period and a light emit period. During the data write period, pixel data of an image to be displayed is written into memory cells 112 in order to put the modulation layer 108 in a predetermined state corresponding to the image to be displayed. During the light emit period, on the other hand, a light is radiated from the light source 101 to the optical spatial modulation device 103 wherein the modulation layer 108 is put in a predetermined state corresponding to the image to be displayed. That is to say, only during the light emit period is the image actually displayed.

On the other hand, the inverted data write period comprises an inverted data write period and a light emit equivalent period. During the inverted data write period, pixel data for inverting the pixel data of the image displayed during the light emit period is written into memory cells 112 in order to put the modulation layer 108 in an inverted state. The light emit equivalent period is a period required to make the length of the inverted data write period equal to the length of the uninverted data write period so that residual electric charge is completely neutralized. During the light emit equivalent period which is a counterpart of the light emit period, the modulation layer 108 is held in an inverted state.

During the data write period, pixel data generated along the scanning lines 110 is supplied to the data lines 111 and written into the memory cells 112.

To put it in detail, first of all, pixel data D1 is supplied to the data lines 111 and, at the same time, a write signal is supplied to the 1st scanning line 110 during the data write period. Thus, the pixel data D1 is written into the memory cells 112 connected to the 1st scanning line. It should be noted that the pixel data D1 is part of pixel data of an image to be displayed, that is, pieces of data for pixels corresponding to the memory cells 112 connected to the 1st scanning line. Then, areas of the modulation layer 108 facing the memory cells 112 on the 1st scanning line which correspond to the pixels are put in a light passing state or a light shielding state in dependence on the pixel data D1. That is to say, the states of pixels corresponding to the memory cells 112 connected to the 1st scanning line are set depending on the pixel data D1.

Then, pixel data D2 is supplied to the data lines 111 and, at the same time, a write signal is supplied to the 2nd scanning line 110. Thus, the pixel data D2 is written into the memory cells 112 connected to the 2nd scanning line. It should be noted that the pixel data D2 is part of pixel data of an image to be displayed, that is, pieces of data for pixels corresponding to the memory cells 112 connected to the 2nd scanning line. Then, areas of the modulation layer 108 facing the memory cells 112 on the 2nd scanning line which correspond to the pixels are put in a light passing state or a light shielding state in dependence on the pixel data D2. That is to say, the states of pixels corresponding to the memory cells 112 connected to the 2nd scanning line are set depending on the pixel data D2.

Thereafter, pixel data is written into the memory cells 112 connected to subsequent scanning lines and the states of pixels corresponding to the memory cells 112 connected to the scanning lines are set depending on the pixel data in the same way. Finally, pixel data Dn is supplied to the data lines 111 and, at the same time, a write signal is supplied to the nth scanning line 110. Thus, the pixel data Dn is written into the memory cells 112 connected to the nth scanning line. It should be noted that the pixel data Dn is part of pixel data of an image to be displayed, that is, pieces of data for pixels corresponding to the memory cells 112 connected to the nth scanning line. Then, areas of the modulation layer 108 facing the memory cells 112 on the nth scanning line which correspond to the pixels are put in a light passing state or a light shielding state in dependence on the pixel data Dn. That is to say, the states of pixels corresponding to the memory cells 112 connected to the nth scanning line are set depending on the pixel data Dn.

As described above, all the pixels are set in states reflecting the image to be displayed during the data write period. It should be noted that, during the data write period, the light source 101 is turned off in order to avoid a disorder state of a light reflected in a state transition of the modulation layer 108.

By the same token, first of all, pixel data D1' is supplied to the data lines 111 and, at the same time, a write signal is supplied to the 1st scanning line 110 during the inverted data write period. Thus, the pixel data D1' is written into the memory cells 112 connected to the 1st scanning line. It should be noted that the pixel data D1' is part of pixel data of an image to be displayed, that is, pieces of data for pixels corresponding to the memory cells 112 connected to the 1st scanning line. Then, the states of areas of the modulation layer 108 facing the memory cells 112 on the 1st scanning line which correspond to the pixels are inverted in dependence on the pixel data D1'.

Then, pixel data D2' is supplied to the data lines 111 and, at the same time, a write signal is supplied to the 2nd scanning line 110. Thus, the pixel data D2' is written into the memory cells 112 connected to the 2nd scanning line. It should be noted that the pixel data D2' is part of pixel data of an image to be displayed, that is, pieces of data for pixels corresponding to the memory cells 112 connected to the 2nd scanning line. Then, the states of areas of the modulation layer 108 facing the memory cells 112 on the 2nd scanning line which correspond to the pixels are inverted in dependence on the pixel data D2'.

Thereafter, pixel data is written into the memory cells 112 connected to subsequent scanning lines and the states of pixels corresponding to the memory cells 112 connected to the scanning lines are set depending on the pixel data in the same way. Finally, pixel data Dn' is supplied to the data lines 111 and, at the same time, a write signal is supplied to the nth scanning line 110. Thus, the pixel data Dn' is written into the memory cells 112 connected to the nth scanning line. It should be noted that the pixel data Dn' is part of pixel data of an image to be displayed, that is, pieces of data for pixels corresponding to the memory cells 112 connected to the nth scanning line. Then, the states of areas of the modulation layer 108 facing the memory cells 112 on the nth scanning line which correspond to the pixels are put in a light passing state or a light shielding state in dependence on the pixel data Dn'.

As described above, the states of all the pixels are inverted during the inverted data write period. It should be noted that, during the data write period and the light emit equivalent period, the light source 101 is turned off.

As indicated by the timing charts shown in Fig. 24, in the ordinary liquid crystal display device, data stored in memory cells of each scanning line is rewritten and then, after data of all memory cells has been rewritten, light is radiated from a light source. Thus, in the case of a liquid crystal display device with a large number of scanning lines, the time allocated to emission of light is shortened and, as a result, a high intensity can not be obtained anymore.

In addition, even if an FLC having a response speed faster than a TN liquid crystal is used, the response speed of its optical spatial modulation device is not sufficient, making it desirable to further increase the response speed.

On the top of that, when a light modulation material that needs neutralization of residual electric charge is used, it is necessary to write inverted data after displaying an image as described above in order to neutralize electric charge injected into a modulation layer, or to supply a pulse voltage for neutralizing electric charge. However, a period for neutralizing electric charge does not contribute to the display of an image. As a result, such neutralization period causes saturation of the response speed and deterioration of the intensity. In the case of neutralization of electric charge by using the 2-field technique as shown in Fig. 24, for example, it is necessary to provide an inverted data write period in addition to the uninverted data write period. As a result, the frame rate is reduced by half, making the efficiency poorer.

### SUMMARY OF THE INVENTION

The present invention is proposed to address the problems described above. It is thus an object of the present invention to provide an optical spatial modulation device which is capable of rewriting a displayed image with a high degree of efficiency and implementing a very fast response speed and an extremely high intensity, and to provide an image display apparatus employing the optical spatial modulation device.

Provided with a plurality of pixels composing an image to be displayed, the reflection type optical modulation device provided by the present invention modulates radiated light for each of the pixels in accordance with pixel data of the image. For each of the pixels, the optical spatial modulation device comprises:
a 1st memory for storing pixel data of an image to be displayed;
a 2nd memory to which pixel data stored in the 1st memory is transferred; and
a driving means for carrying out a driving operation in accordance with pixel data transferred to the 2nd memory in order to change the state of the pixel.

In an operation to display an image, first of all, pixel data is written into the 1st memory for each of the pixels composing the image. Then, the pixel data written into the 1st memory is transferred to the 2nd memory. Finally, the state of each pixel is changed by the driving means in accordance with the pixel data transferred to the 2nd memory.

The reflection type optical modulation device is characterised in further comprising :
a judgement forming means for forming a judgement as to whether or not a state of each pixel of said displayed image is the same as a state of said pixel of said image to be displayed anew prior to said operation to change said displayed image; and
a 3rd memory (56) for storing a result of said judgement formed by said judgement forming means.

On the other hand, the image display apparatus provided by the present invention comprises a light source for radiating light and the optical spatial modulation device. Provided with a plurality of pixels composing an image to be displayed, the optical spatial modulation device modulates the light radiated by the light source for each of the pixels in accordance with pixel data of the image.

Document W0 97 04436 discloses a display device for displaying binary image in which the pixel data are stored in a plurality of small circuits coupled to pixel mirrors. The pixel mirrors are simultaneously driven a frame at a time.

On the other hand, document US-A-5 534 884 shows a display panel which is driven only when and where the information desired to be displayed is dissimilar to the information being displayed. However, the display panel disclosed in this document has the same draw-backs as the displayed apparatus described above, namely a too low response speed for rewriting a displayed image with a high degree of efficiency and a high intensity.

### BRIEF DESCRIPTION OF THE DRAWINGS

Preferred embodiments of the present invention will be described by referring to the following diagrams wherein:
Fig. 1 is a conceptual diagram showing the configuration of a typical reflection type image display apparatus;
Fig. 2 is a diagram showing a squint view of a model representing the configuration of a typical optical spatial modulation device;
Fig. 3 is a diagram showing a squint view of a model representing a configuration of disassembled components of an enlarged portion of the optical spatial modulation device shown in Fig. 2;
Fig. 4 is a cross-sectional diagram showing a model representing a stacked layer structure of the optical spatial modulation device shown in Fig. 2
Fig. 5 is a diagram showing a squint view of a model representing a configuration of a first example of an optical spatial modulation device;
Fig. 6 is a diagram showing a squint view of a model representing a configuration of an enlarged portion of the optical spatial modulation device shown in Fig. 5;
Fig. 7 is a block diagram showing the configuration of a memory cell employed in the 1st example;
Fig. 8 is driving timing charts of timing of operations to drive a light source and an optical spatial modulation device employed in an image display apparatus in the 1st example;
Fig. 9 is a diagram showing a squint view of a model representing the configuration of an optical spatial modulation device employed in the 2nd example;
Fig. 10 is a diagram showing a squint view of a model representing a configuration of an enlarged portion of the optical spatial modulation device shown in Fig. 9;
Fig. 11 is a block diagram showing the configuration of a memory cell employed in the 2nd example;
Fig. 12 is driving timing charts of timing of operations to drive a light source and an optical spatial modulation device employed in an image display apparatus implemented by the 2nd example;
Fig. 13 is a diagram showing a squint view of a model representing the configuration of an optical spatial modulation device employed in a 3rd example;
Fig. 14 is a diagram showing a squint view of a model representing a configuration of an enlarged portion of the optical spatial modulation device shown in Fig. 13;
Fig. 15 is a block diagram showing the configuration of a memory cell employed in the 3rd example;
Fig. 16 is driving timing charts of timing of operations to drive a light source and an optical spatial modulation device employed in an image display apparatus implemented by the 3rd example;
Fig. 17 is a diagram showing a squint view of a model representing the configuration of an optical spatial modulation device employed in an embodiment of the invention;
Fig. 18 is a diagram showing a squint view of a model representing a configuration of an enlarged portion of the optical spatial modulation device shown in Fig. 17;
Fig. 19 is a block diagram showing the configuration of a memory cell employed in the embodiment;
Fig. 20 is driving timing charts of timing of operations to drive a light source and an optical spatial modulation device employed in an image display apparatus implemented by the embodiment;
Fig. 21 is a diagram showing a typical waveform of a driving signal of a driver employed in the embodiment;
Fig. 22 is a conceptual diagram showing an image display apparatus;
Fig. 23 is a diagram showing a squint view of disassembled components of an enlarged portion of an optical spatial modulation device; and
Fig. 24 is driving timing charts of an image display apparatus adopting a 2-field technique.

### DETAILED DESCRIPTION OF THE PREFERRED EMBODIMENTS

The present invention will become more apparent from a careful study of the following detailed description of some preferred embodiments with reference to the accompanying diagrams.

### Configuration of the Image Display Apparatus

The description begins with simple and plain explanation of a configuration of a typical image display apparatus.

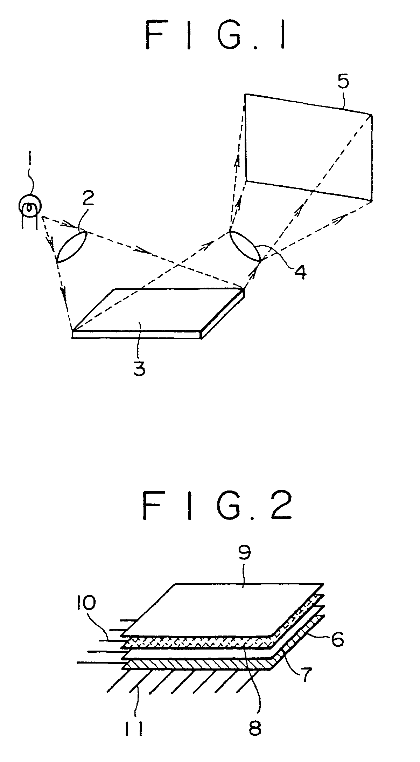

Fig. 1 is a conceptual diagram showing the image display apparatus which comprises a light source 1, a radiation optical system 2, an optical spatial modulation device 3, a projection optical system 4 and a screen 5.

The light source 1 can be turned on and off at a high speed and, as will be described later, the light source 1 is turned on during a light emit period and turned off during other periods. It should be noted that a colour image can be displayed by means of a light source used as a light source 1 that is capable of emitting red light, green light and blue light corresponding to the 3 elementary colours of light. To put it concretely, 3 independent light sources can be used for emitting red light, green light and blue light respectively corresponding to the 3 elementary colours of light. As an alternative, a dichroic mirror can be used for splitting light radiated by a single light source into red light, green light and blue light.

The radiation optical system 2 is an optical system used for radiating a light coming from the light source 1 to the optical spatial modulation device 3. That is to say, a light generated by the light source 1 is radiated to the optical spatial modulation device 3 by way of the radiation optical system 2.

The optical spatial modulation device 3 is the optical spatial modulation device provided by the present invention. Its details will be described later. It should be noted that the optical spatial modulation device 3 is an optical spatial modulation device of a reflection type wherein a light generated by the light source 1 is modulated and then reflected for each of a number of pixels composing an image. Such a reflective optical spatial modulation device 3 comprises elements such as memories to be described later. Since the elements are provided on a side opposite to a surface that reflects light, the area of the effective aperture of each pixel is no longer narrowed by the existence of the elements. That is to say, in the case of such a reflective optical spatial modulation device 3, the area of the effective aperture of each pixel can be enlarged.

It should be noted, however, that it is also possible to use an optical spatial modulation device 3 of a transmission type wherein a light generated by the light source 1 is modulated and then passed through. When a transmissive optical spatial modulation device is used as the optical spatial modulation device 3, a backlight is typically provided on the back surface of the optical spatial modulation device 3. A light emitted by the backlight and passing through the optical spatial modulation device 3 displays an image. By using a transmissive optical spatial modulation device, the image display apparatus can be made very thin.

The projection optical system 4 is an optical system for projecting a light modulated and reflected by the optical spatial modulation device 3 on the screen 5. A light emitted by the light source 1 and then reflected by the optical spatial modulation device 3 is projected on the screen 5 by the projection optical system 4. That is to say, in this image display apparatus, an image obtained by modulation of a light generated by the light source 1 by means of the optical spatial modulation device 3 is displayed on the screen 5.

As described above, in this image display apparatus, a light generated by the light source 1 is radiated by the radiation optical system 2 to the optical spatial modulation device 3 and a light modulated and reflected by the optical spatial modulation device 3 is projected by the projection optical system 4 on the screen 5. As a result, an image is displayed on the screen 5.

When displaying an image in this image display apparatus, the light source 1 is turned on and off at a high speed and, at the same time, the optical spatial modulation device 3 is driven synchronously with the blinking of the light source 1. To put it in detail, when an image displayed in this image display apparatus is changed, pixels of the optical spatial modulation device 3 are rewritten while the light source 1 is in an off state. At a point of time the operation to rewrite all pixels is completed, the light source 1 is turned on. In this way, images created by light modulated for each of the images are displayed sequentially on the screen 5.

It should be noted that, if the time required for rewriting the pixels of the optical spatial modulation device 3 is short enough to make the visual sense of the watcher unaware of the rewriting process, it is not necessary to turn off the light source 1.

### Configuration of the Optical Spatial Modulation Device

The following is a description of the optical spatial modulation device 3 employed in the image display apparatus described above.

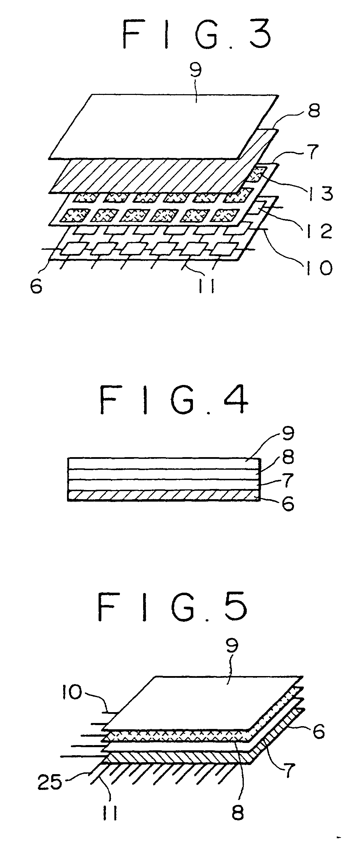

Fig. 2 is a diagram showing a squint view of a model of the optical spatial modulation device 3 in a simple and plain manner. Fig. 3 is a diagram showing a squint view of a model representing disassembled components of an enlarged portion of the optical spatial modulation device 3 in a simple and plain manner. Fig. 4 is a cross-sectional diagram showing a model representing a stacked layer structure of the optical spatial modulation device 3.

The optical spatial modulation device 3 comprises a plurality of pixels each having a controllable optical reflectance. Light radiated to the optical spatial modulation device 3 is modulated and reflected for each of the pixels in accordance with information on an image to be displayed. As shown in Figs. 2 to 4, the optical spatial modulation device 3 comprises a driving layer 6, a reflection layer 7 above the driving layer 6, a modulation layer 8 above the reflection layer 7 and a common electrode 9 above the modulation layer 8.

The driving layer 6 comprises driving devices created thereon for changing the states of the pixels in accordance with an image to be displayed. On the driving layer 6, a plurality of scanning lines 10 and a plurality of data lines 11 are created and a memory cell 12 is formed at each point of intersection of the scanning lines 10 and the data lines 11 as shown in Figs. 2 and 3. Each of the memory cells 12 corresponds to a pixel. In this optical spatial modulation device 3, an electric field can be applied to the modulation layer 8 for each of the pixels, that is, for each of the memory cells 12 created on the driving layer 6. It should be noted that, on the driving layer 6, control lines to be described later are created in addition to the scanning lines 10 and the data lines 11. However, the control lines are not shown in Figs. 2 and 3.

Made of a light reflecting material having a high reflectance such as aluminum, the reflection layer 7 is a layer for reflecting light coming from the light source 1. It should be noted that the reflection layer 7 is provided so that light coming from the light source 1 is reflected thereby. For example, the reflection layer 7 can comprise light reflecting reflection pads 13 each provided for a pixel as shown in Fig. 3. As an alternative, the reflection layer 7 can be designed so that light is reflected uniformly over the entire area of the optical spatial modulation device 3. In the case of a reflection layer 7 comprising light reflecting reflection pads 13 each provided for a pixel, a light is reflected by the reflection layer 7 for each pixel so that interference among pixels can be avoided. In the case of a reflection layer 7 designed so as to reflect light uniformly over the entire area of the optical spatial modulation device 3, on the other hand, a high intensity can be obtained because light coming from the light source 1 is reflected over the entire area.

Used for modulating a light coming from the light source 1, the modulation layer 8 is made of a material for light modulation such as an FLC, PDLC or TN liquid crystal which fills up a gap between the reflection layer 7 and the common electrode 9. The modulation layer 8 is capable of controlling the optical transmissivity in accordance with an electric field applied between the driving layer 6 and the common electrode 9 for each pixel. That is to say, by controlling electric fields applied to the modulation layer 8, the quantity of light passing through the modulation layer 8 can be controlled. It should be noted that, in the case of a modulation layer 8 made of a material requiring orientation such as a crystal, an orientation layer for orientating the material needs to be provided inside or in close proximity to the modulation layer 8.

In this case, a layer that can be put in either of 2 states depending on the intensity of a magnetic field applied thereto is used as the modulation layer 8. The 2 states are a state with a high optical transmissivity and a state with a low optical transmissivity. Thus, the modulation layer 8 allows each pixel to undergo 2-value optical modulation. A state which the modulation layer 8 has initially is referred to as an initial state. The initial state can be either of the 2 states. A state exhibiting an optical transmissivity different from that of the initial state is referred to a driven state. In the case of a modulation layer 8 made of an FLC, for example, the initial state of a pixel is a state in which no electric charge is injected into a portion of the modulation layer 8 corresponding to the pixel. On the other hand, the driven state of a pixel is a state in which electric charge is injected into a portion of the modulation layer 8 corresponding to the pixel.

As described above, in the present embodiment, the modulation layer 8 can be put only in 2 states. It should be noted, however, that a modulation layer that can be put in 3 or more states can also be used. In such a case, the modulation layer can be put in any one of a plurality of driven states.

In addition, in the embodiment described above, by changing the optical transmissivity of the modulation layer 8 itself, the quantity of light of each pixel can be controlled. It is worth noting, however, that by making the modulation layer 8 of a material allowing the polarisation state of a passing light to change and combining such a modulation layer 8 with a polarisation optical system, the quantity of light for each pixel can also be controlled.

To put it in detail, in the case of a modulation layer 8 made of a material allowing the polarisation state of a passing light to change, a polarisation optical system composed of a polarisation plate with an optical transmissivity thereof varying in accordance with the polarisation state of the light or a polarisation beam splitter or the like is combined with the modulation layer 8. Then, by controlling an electric field applied to the modulation layer 8, the polarisation state of a light passing through the modulation layer 8 can be changed. As a result, the optical transmissivity of the light passing through the polarisation optical system also changes as well. In this way, the quantity of light for each pixel can be controlled as is the case with the embodiment described above.

In addition, in the present embodiment, the modulation layer 8 is made of a material for light modulation such as an FLC, PDLC or TN liquid crystal which fills up a gap between the reflection layer 7 and the common electrode 9. It is worth noting, however, that this description is not intended to be construed in a limiting sense. That is to say, the configuration of the modulation layer 8 is not limited to such a structure.

For example, as a light modulating means, the modulation layer 8 can be implemented by a grating light valve making use of light interference or a deformable mirror grating utilising a metallised elastomer, the shape of which is changed by an electric field. Such a light modulating means is described in documents such as collections of academic society manuscripts "SPIE Vol. 3013, pages 165 to 171" and "SPIE Vol. 3013, pages 112 to 125". When such a light modulating means is used, the positions of the reflection layer 7 and the common electrode 9 may change. At any rate, the present invention can be applied to any light modulating means as long as the light modulating means can be put in at least 2 pixel states by a signal applied thereto.

It should be noted that such light modulating means can be classified into 3 main categories, i. e., a grating light valve having no state storing characteristic by itself or a deformable mirror display described in the SPIE Vol. 3013, pages 112 to 125, a grating light valve with a state storing characteristic described in the SPIE Vol. 3013, pages 165 to 171 and a magnetic particle display described in "Electronic Display Devices" authored by Shoichi Matsumoto.

Made of a transparent semiconductor material, the common electrode 9 is an electrode common to the memory cells 12 created on the driving layer 6. The reflection layer 7 and the modulation layer 8 are sandwiched by the driving layer 6 and the common electrode 9 with the transparent semiconductor material facing the driving layer 6.

When a light generated by the light source 1 is radiated to the optical spatial modulation device 3 described above as shown in Fig. 1, the light from the light source 1 passes through the common electrode 9 made of the transparent semiconductor material, entering the modulation layer 8 for carrying out optical modulation on the light for each pixel. The light modulated by the modulation layer 8 is then reflected by the reflection layer 7. Then, the reflected light again undergoes optical modulation for each pixel by the modulation layer 8 before passing through the common electrode 9 to be finally transmitted to the projection optical system 4.

At that time, by controlling an electric field applied to the modulation layer 8 for each pixel, the optical transmissivity of the modulation layer 8 can be controlled for each pixel. In this way, a light modulated by the modulation layer 8 is output as a reflected light. That is to say, in this optical spatial modulation device 3, by controlling the electric field applied to the modulation layer 7 from the driving layer 6 for each memory cell 112, the reflectance of the modulation layer 8 can be controlled for each pixel.

In addition, the optical spatial modulation device 3 is capable of changing the state of the modulation layer 8 for the entire surface in a batch operation as described below. As a result, it is possible to increase the response speed, to raise the intensity and improve other characteristics. The following is a more detailed description of embodiments and related exemplary systems each implementing an image display apparatus employing the optical spatial modulation device 3.

### 1st Example

The description begins with a 1st example wherein the modulation layer 8 does not have a state storing characteristic and it is thus necessary to sustain electric fields applied to the modulation layer 8 while an image is being displayed. In other words, since the modulation layer 8 does not have a state storing characteristic as described above, it is necessary to apply electric fields to the modulation layer 8 continuously in order to sustain a driven state of the modulation layer 8. It should be noted that, in the case of a modulation layer 8 having a state storing characteristic, on the other hand, once the modulation layer 8 is put in a driven state, it is no longer necessary to sustain the electric fields applied to the modulation layer 8 continuously.

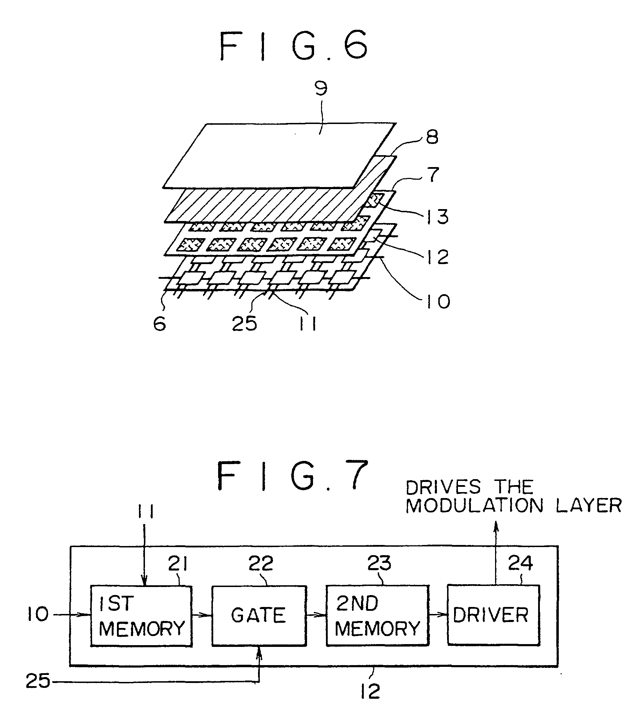

In this example control lines 25 are created on the driving layer 6 of the optical spatial modulation device 3 as shown in Figs. 5 and 6 and each of the memory cells 12 of the optical spatial modulation device 3 is designed to comprise a 1st memory 21, a gate 22, a 2nd memory 23 and a driver 24 as shown in Fig. 7. The 2nd memory 23 employed in the memory cell 12 is used for storing pixel data of an image being displayed. On the other hand, pixel data of an image to be displayed next is written into the 1st memory 21.

The 1st memory 21 is connected to the scanning line 10 and the data line 11. Input signals coming from the scanning line 10 and the data line 11 cause pixel data for the memory cell 12 connected to the scanning line 10 and the data line 11 to be written into the 1st memory 21 of the memory cell 12. To put it concretely, in order to display an image, data of each pixel for indicating whether a portion of the modulation layer 8 corresponding to the pixel is to be put in an initial state or a driven state is written into the 1st memory 21 of the memory cell 12 corresponding to the portion of the modulation layer 8.

Provided between the 1st and 2nd memories 21 and 23, the gate 22 is controlled into closed and open states by a control signal supplied by the control line 25. When the gate 22 is put in an open state by the control signal from the control line 25, pixel data stored in the 1st memory 21 is transferred to the 2nd memory 23.

Pixel data stored in the 1st memory 21 is transferred to the 2nd memory 23 by way of the gate 22. Then, the driver 24 is driven in accordance with the pixel data transferred to the 2nd memory 23. That is to say, the 2nd memory 23 is used for holding pixel data of an image being displayed.

Driven in accordance with the pixel data transferred to the 2nd memory 23, the driver 24 changes the state of the pixel. To put it concretely, the driver 24 changes an electric field applied to the modulation layer 8 in accordance with the pixel data transferred to the 2nd memory 23, putting the modulation layer 8 in an initial or driven state.

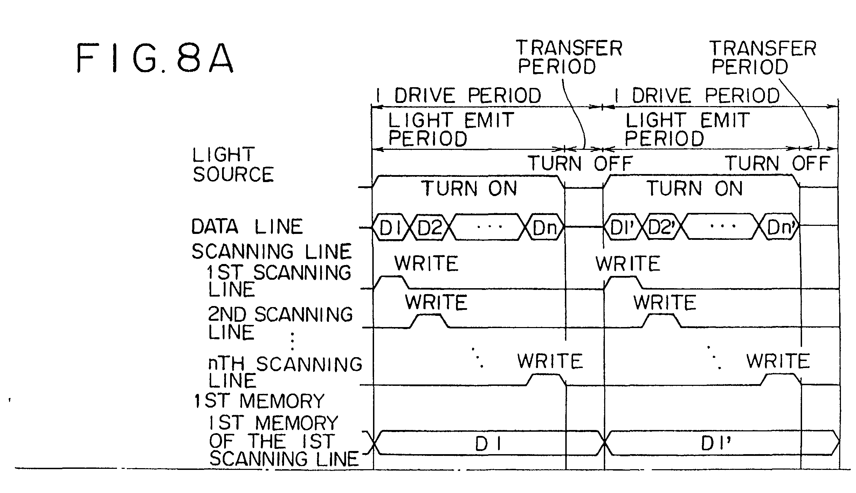

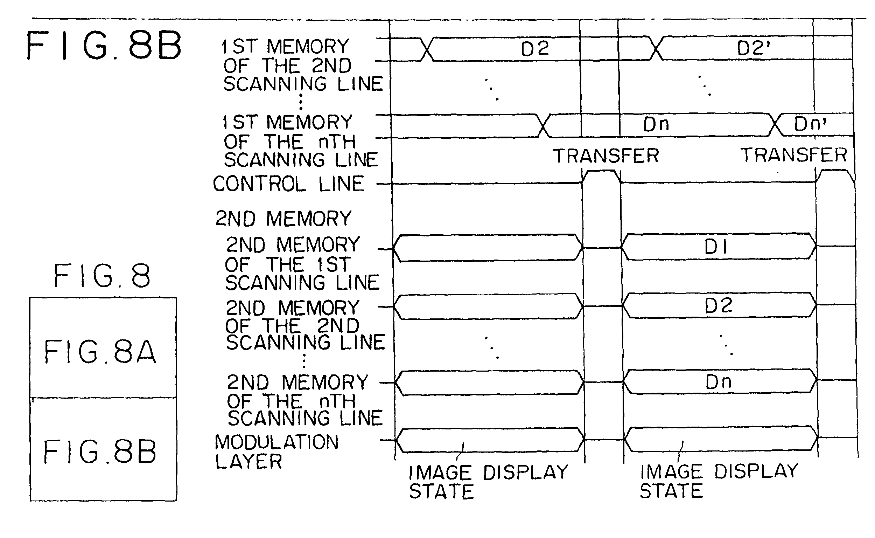

The following is a description of a driving method adopted in the image display apparatus employing the optical spatial modulation device 3, on which a memory cell 12 described above is created for each pixel, by referring to timing charts shown in Fig. 8. It should be noted that the number of scanning lines 10 of the optical spatial modulation device 3 is n.

The timing charts shown in Fig. 8 represent a period of time required to display 2 screens. That is to say, the period of time comprises a period for displaying a 1st image and a period for displaying a 2nd image, an image immediately following the 1st image. It should be noted that, in an operation to display images, a period required for displaying 1 image is actually a very short period of the order of milliseconds, microseconds or even nanoseconds.

As shown in Fig. 8, a drive period, that is, a period required for displaying an image, comprises a light emit period and a transfer period. The light emit period is a period during which the light source 1 is turned on, causing an image to be displayed on the screen 5. On the other hand, the transfer period is a period during which pixel data is transferred from the 1st memory 21 to the 2nd memory 23. During the transfer period, the light source 1 is turned off.

The light emit period is also a period during which pixel data of an image to be displayed next is written into the 1st memory 21. That is to say, during the light emit period for displaying a 1st image, pieces of pixel data of a 2nd image are sequentially written into the 1st memory 21 of each of the memory cells 12 selected by the scanning line 10 and the data line 11.

To put it concretely, during the light emit period for displaying a 1st image, first of all, pixel data D1 of a 2nd image is supplied to the data lines 11 and a write signal is supplied to the 1st scanning line 10. As a result, the pixel data D1 is written into the 1st memory 21 of each of the memory cells 12 connected to the 1st scanning line. It should be noted that the pixel data D1 is pixel data of the 2nd image for pixels corresponding to memory cells 12 connected to the 1st scanning line.

Next, pixel data D2 of the 2nd image is supplied to the data lines 11 and a write signal is supplied to the 2nd scanning line 10. As a result, the pixel data D2 is written into the 1st memory 21 of each of the memory cells 12 connected to the 2nd scanning line. It should be noted that the pixel data D2 is pixel data of the 2nd image for pixels corresponding to memory cells 12 connected to the 2nd scanning line.

Thereafter, pieces of pixel data of the 2nd image are written for the subsequent scanning lines 10 in the same way. Finally, pixel data Dn of a 2nd image is supplied to the data lines 11 and a write signal is supplied to the nth scanning line 10. As a result, the pixel data Dn is written into the 1st memory 21 of each of the memory cells 12 connected to the nth scanning line. It should be noted that the pixel data Dn is pixel data of the 2nd image for pixels corresponding to memory cells 12 connected to the nth scanning line.

As described above, pixel data of an image to be displayed next is written into all 1st memories 21 during the light emit period. During the light emit period, nothing but the operation to write pixel data of an image to be displayed next into all 1st memories 21 is carried out and pixel data required for driving the modulation layer 8 is already stored in the 2nd memories 23. Thus, the states of the pixels remain unchanged as they are. As a result, even if the light source 1 is turned on throughout the light emit period, no disorder state will result in the light reflected by the optical spatial modulation device 3. That is to say, in this optical spatial modulation device 3, since pixel data required for driving the modulation layer 8 are stored in the 2nd memory 23, pixel data required to display a next image can be written into the 1st memory even while the driver 24 is being driven by the pixel data already stored in the 2nd memory 23.

After pixel data of an image to be displayed next have been written into the 1st memories 21 for all the memory cells 12, the light source 1 is turned off, letting the optical spatial modulation device 3 enter the transfer period. In the transfer period, a control signal from the control line 25 is supplied to each of the gates 22, opening the gates 22 for all the memory cells 12. As a result, pixel data is transferred from the 1st memories 21 to the 2nd memories 23 as a batch for all the memory cells 12.

After pixel data has been transferred from the 1st memories 21 to the 2nd memories 23 as a batch for all the memory cells 12, the optical spatial display device 3 transits to a period for displaying the 2nd image. In this period, the driver 24 is driven in accordance with pixel data written in the 2nd memory 23 and the modulation layer 8 is set in an image displaying state, that is, a state according to an image to be displayed, so that the 2nd image is displayed. In this state, the light source 1 is turned on. As a result, the 2nd image is displayed on the screen 5. It should be noted that, while the 2nd image is being displayed, pieces of pixel data D1', D2', ---, Dn' of an image following the 2nd image are written into the 1st memories 21 in the same way as the pieces of pixel data D1, D2, ---, Dn of the 2nd image were written into the 1st memories 21.

As described above, in this optical spatial modulation device 3, instead of changing the states of pixels in scanning line unit, the states of all the pixels can be changed in a batch operation. That is to say, by using the optical spatial modulation device 3, a displayed image is not updated in scanning line units, but can be updated in as a batch for the entire screen.

In addition, in this image display apparatus, since the states of the modulation layer 8 are sustained except during a transfer period for transferring pixel data from the 1st memories 21 to the 2nd memories 23 as a batch, the light source 1 can be put in an on state. As a result, the light emit period per image can be lengthened and the light utilisation rate can be increased.

### 2nd Example

The following is a description of a 2nd example wherein it is necessary to neutralize residual electric charge of the modulation layer 8. It should be noted that, in the case of the 2nd example as a material of the modulation layer 8, a light modulation material that exhibits a change in light modulation state in response to an applied electric field without regard to the polarity of the electric field is used. That is to say, in the case of the 2nd example, the modulation layer 8 is put in a driven state when a positive or negative electric field generated by the driving layer 6 is applied thereto. With no electric field applied thereto, on the other hand, the modulation layer 8 is put in an initial state.

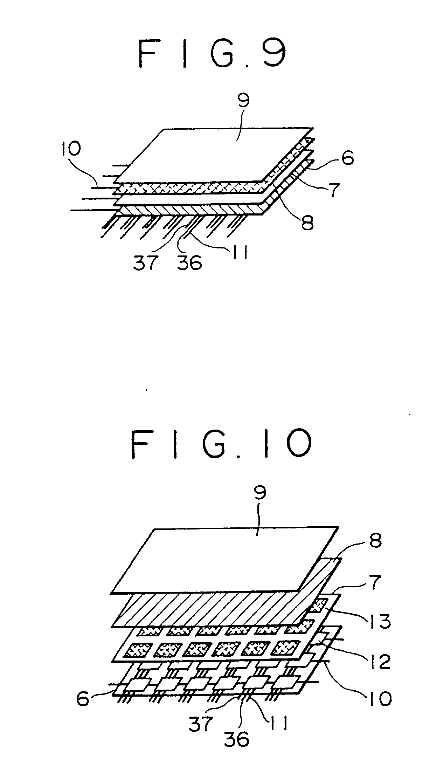

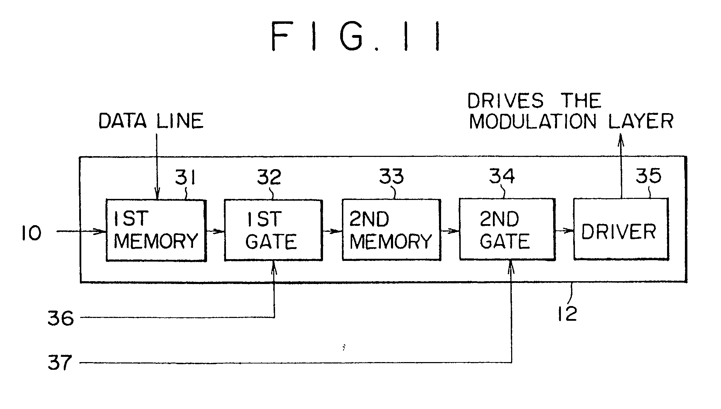

In the 2nd example, 1st control lines 36 and 2nd control lines 37 are created on the driving layer 6 of the optical spatial modulation device 3 as shown in Figs. 9 and 10 and each of the memory cells 12 of the optical spatial modulation device 3 is designed to comprise a 1st memory 31, a 1st gate 32, a 2nd memory 33, a 2nd gate 34 and a driver 35 as shown in Fig. 11. The 2nd memory 33 employed in the memory cell 12 is used for storing pixel data of an image being displayed. On the other hand, pixel data of an image to be displayed next is written into the 1st memory 31.

The 1st memory 31 is connected to the scanning line 10 and the data line 11. Input signals coming from the scanning line 10 and the data line 11 cause pixel data for the memory cell 12 connected to the scanning line 10 and the data line 11 to be written into the 1st memory 31 of the memory cell 12. To put it concretely, in order to display an image, data of each pixel for indicating whether a portion of the modulation layer 8 corresponding to the pixel is to be put in an initial state or a driven state is written into the 1st memory 31 of the memory cell 12 corresponding to the portion of the modulation layer 8.

Provided between the 1st and 2nd memories 31 and 33, the 1st gate 32 is controlled into closed and open states by a control signal supplied by the 1st control line 36. When the 1st gate 32 is put in an open state by the control signal from the 1st control line 36, pixel data stored in the 1st memory 31 is transferred to the 2nd memory 33.

Pixel data stored in the 1st memory 31 is transferred to the 2nd memory 33 by way of the 1st gate 32. Then, the driver 35 is driven in accordance with the pixel data transferred to the 2nd memory 33. That is to say, the 2nd memory 33 is used for holding pixel data of an image being displayed.

Provided between the 2nd memory 33 and the driver 35, the 2nd gate 34 controls the polarity of pixel data supplied to the driver 35 from the 2nd memory 33 in accordance with a control signal supplied by the 2nd control line 37. That is to say, in this memory cell 12, pixel data supplied to the driver 35 from the 2nd memory 33 can be inverted by the 2nd gate 34.

The driver 35 drives the modulation layer 8 in accordance with the pixel data supplied thereto from the 2nd memory 33 by way of the 2nd gate 34 in order to change the state of the pixel. To put it concretely, the driver 35 changes an electric field applied to the modulation layer 8 in accordance with the pixel data supplied thereto from the 2nd memory 33 by way of the 2nd gate 34, putting the modulation layer 8 in either an initial state or a driven state.

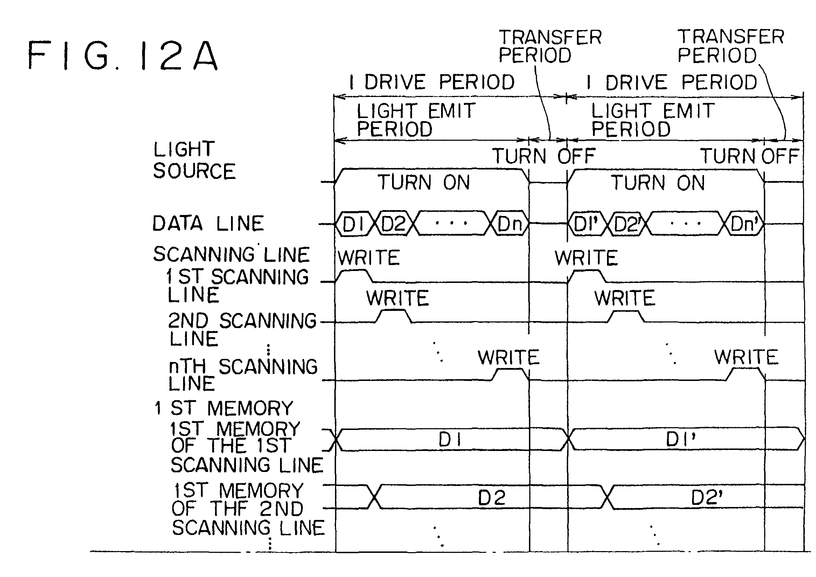

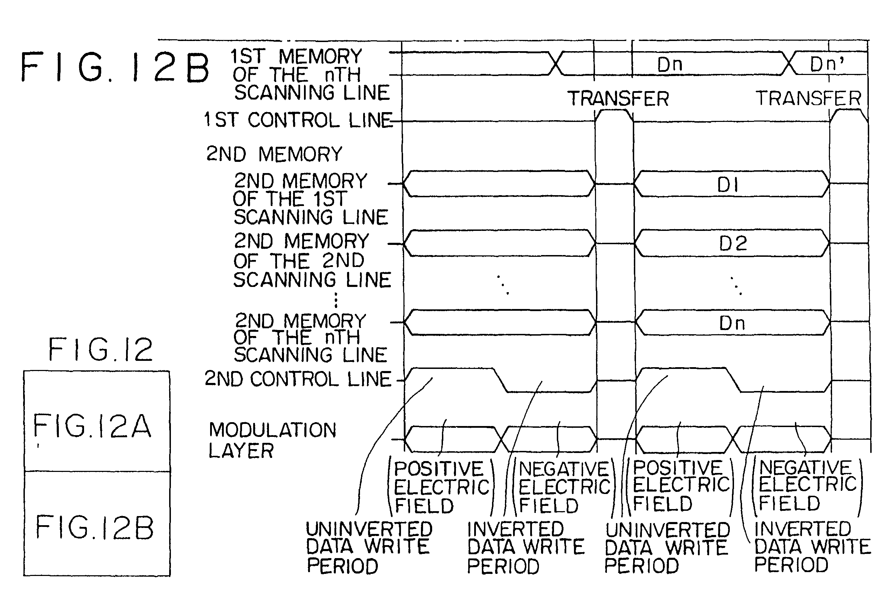

The following is a description of a driving method adopted in the image display apparatus employing the optical spatial modulation device 3, on which a memory cell 12 described above is created for each pixel, by referring to timing charts shown in Fig. 12.

Much like the 1st example, in the 2nd example, a period required for displaying an image comprises a light emit period and a transfer period. The light emit period is a period during which all pixel data of an image to be displayed next is written into the 1st memory 31. On the other hand, the transfer period is a period during which pixel data is transferred from the 1st memory 31 to the 2nd memory 33 as a batch.

To put it in detail, during the light emit period for displaying a 1st image, pieces of pixel data representing a 2nd image are sequentially written into the 1st memory 31 of each of the memory cells 12 selected by the scanning line 10 and the data line 11. Then, after all pixel data of the 2nd image to be displayed next have been written into the 1st memories 31, the optical spatial modulation device 3 enters a transfer period during which a control signal is supplied to the 1st gate 32 from the 1st control line 36, causing all the pixel data to be transferred from the 1st memories 31 to the 2nd memories 33 as a batch. Then, after all the pixel data has been transferred, the optical spatial modulation device 3 again enters a light emit period in which the pixel data transferred to the 2nd memory 33 is supplied to the driver 35 by way of the 2nd gate 34. The driver 35 then puts the modulation layer 8 in either an initial state or a driven state for each pixel in accordance with the pixel data transferred to the 2nd memory 33. Much like the 1st example, in the 2nd example, the light emit period per image can be lengthened and the light utilisation rate can be increased.

However, the 2nd example is different from the 1st example in that, in the case of the former, pixel data supplied to the driver 35 during the light emit period can be inverted. To be more specific, in the case of the 2nd example, a control signal supplied to the 2nd gate 34 from the 2nd control line 37 during the light emit period can be used for inverting pixel data supplied to the driver 35 in the 2nd gate 34. Thus, the light emit period comprises an uninverted data write period and an inverted data write period. During the uninverted data write period, pixel data is supplied to the driver 35 as it is. During the inverted data write period, on the other hand, inverted pixel data is supplied to the driver 35.

As described above, during the inverted data write period, inverted pixel data is supplied to the driver 35. Thus, the polarity of an electric field applied to the modulation layer 8 in the inverted data write period is opposite to the polarity in the uninverted data write period. It should be noted that, in the case of the 2nd example, as a material of the modulation layer 8, a light modulation material that exhibits a change in light modulation state in response to an applied electric field without regard to the polarity of the electric field is used. As a result, the light modulation by the modulation layer 8 during the uninverted data write period is the same as the light modulation by the modulation layer 8 during the inverted data write period.

By inverting pixel data supplied to the driver 35 during the light emit period as described above, a positive or negative electric field applied to the modulation layer 8 is no longer sustained all the time. That is to say, when displaying an image, a positive electric field is applied to the modulation layer 8 for a period of time equal to a period during which a negative electric field is applied. Thus, since no residual electric charge is accumulated in the modulation layer 8, the modulation layer 8 can be sustained at a neutral polarity. As a result, the modulation layer 8 is capable of operating in a stable state for a long period of time. It should be noted that, when pixel data is inverted as described above, the light source 1 can be turned off in a transient state between an uninverted data write period and an inverted data write period.

As described above, in the case of the 2nd example, as a material of the modulation layer 8, a light modulation material that exhibits a change in light modulation state in response to an applied electric field without regard to the polarity of the electric field is used. It is worth noting that, as a material of the modulation layer 8, a light modulation material that exhibits a change in light modulation state in response to inversion of an applied electric field can also be used. In this case, the light source 1 can be turned off in the inverted data write period.

### 3rd Example

In the case of a 3rd example, a light modulation material having a state storing characteristic such as the FLC and the PDLC is used as a material of the modulation layer 8. When displaying an image, an electric field is applied to the modulation layer 8 only when it is necessary to change the modulation layer from an initial state to a driven state. The modulation layer 8 is reset to an initial state before displaying a next image.

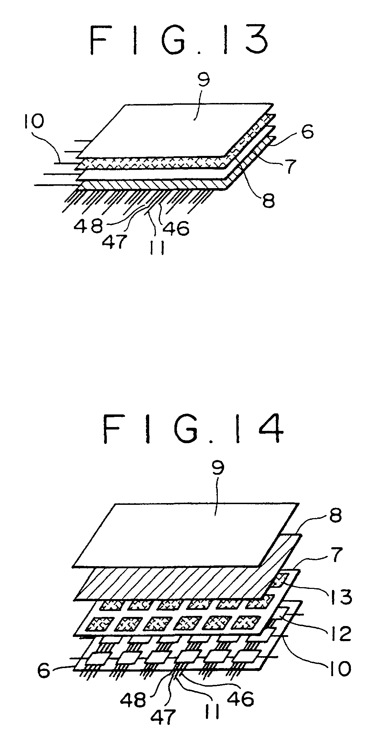

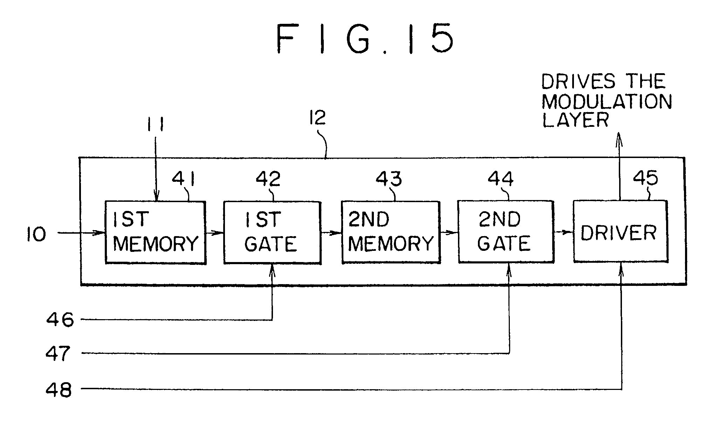

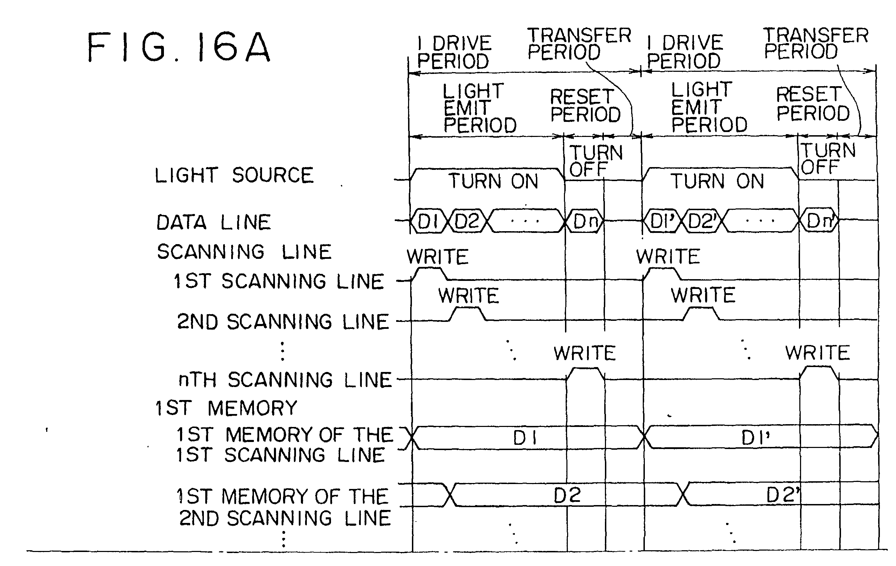

In the 3rd example, 1st control lines 46, 2nd control lines 47 and 3rd control lines 48 are created on the driving layer 6 of the optical spatial modulation device 3 as shown in Figs. 13 and 14 and each of the memory cells 12 of the optical spatial modulation device 3 is designed to comprise a 1st memory 41, a 1st gate 42, a 2nd memory 43, a 2nd gate 44 and a driver 45 as shown in Fig. 15. The 2nd memory 43 employed in the memory cell 12 is used for storing pixel data of an image being displayed. On the other hand, pixel data of an image to be displayed next is written into the 1st memory 41.

The 1st memory 41 is connected to the scanning line 10 and the data line 11. Input signals coming from the scanning line 10 and the data line 11 cause pixel data for the memory cell 12 connected to the scanning line 10 and the data line 11 to be written into the 1st memory 41 of the memory cell 12. To put it concretely, in order to display an image, data of each pixel for indicating whether a portion of the modulation layer 8 corresponding to the pixel is to be put in an initial state or a driven state is written into the 1st memory 41 of the memory cell 12 corresponding to the portion of the modulation layer 8.

Provided between the 1st and 2nd memories 41 and 43, the 1st gate 42 is controlled into closed and open states by a control signal supplied by the 1st control line 46. When the 1st gate 42 is put in an open state by the control signal from the 1st control line 46, pixel data stored in the 1st memory 41 is transferred to the 2nd memory 43.

Pixel data stored in the 1st memory 41 is transferred to the 2nd memory 43 by way of the 1st gate 42. Then, the driver 45 is driven in accordance with the pixel data transferred to the 2nd memory 43. That is to say, the 2nd memory 43 is used for holding pixel data of an image being displayed.

Provided between the 2nd memory 43 and the driver 45, the 2nd gate 44 is put in an open or closed state by a control signal supplied by the 2nd control line 47. When the 2nd gate 44 is put in an open state by the control signal from the 2nd control line 47, pixel data stored in the 2nd memory 43 is supplied to the driver 45.

The driver 45 drives the modulation layer 8 in accordance with the pixel data supplied thereto from the 2nd memory 43 by way of the 2nd gate 44 in order to change the state of the pixel. To put it concretely, the driver 45 changes an electric field applied to the modulation layer 8 in accordance with the pixel data supplied thereto from the 2nd memory 43 by way of the 2nd gate 44, putting the modulation layer 8 in either an initial state or a driven state. A 3rd control line 48 is connected to the driver 45. Driven by a control signal coming from the 3rd control line 48, the driver 45 is capable of driving the modulation layer 8 to return to an initial state.

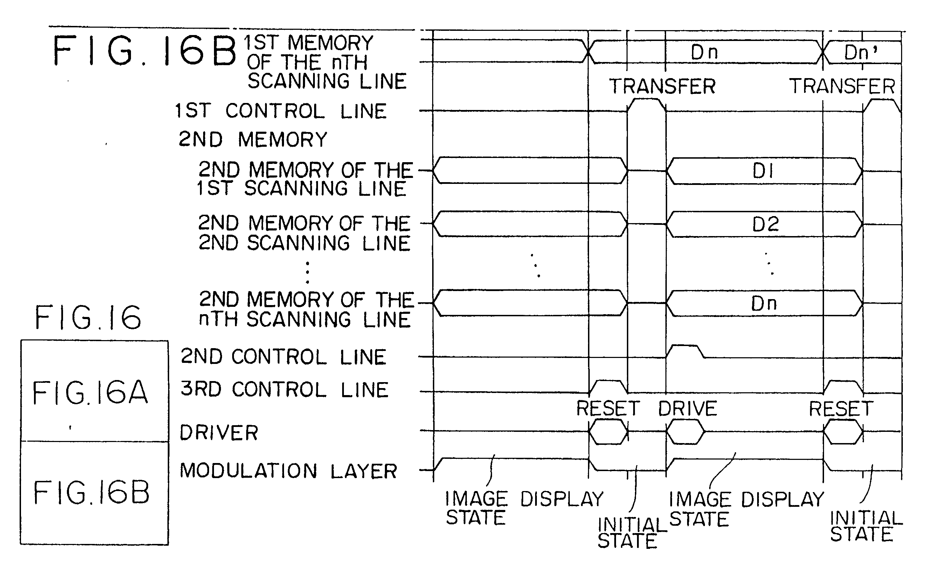

The following is a description of a driving method adopted in the image display apparatus employing the optical spatial modulation device 3, on which a memory cell 12 described above is created for each pixel, by referring to timing charts shown in Fig. 16.

As shown in Fig. 16, a period required for displaying an image comprises a light emit period, a reset period and a transfer period. The light emit period is a period during which the light source 1 is turned on and an image is displayed on the screen 5. Much like the 1st and 2nd examples, during the light emit period, all pixel data of an image to be displayed next is written into the 1st memory 41. During the reset and transfer periods, on the other hand, the light source 1 is turned off.

The reset period is a period during which the modulation layer 8 is reset to an initial state before new pixel data is transferred from the 1st memory 41 to the 2nd memory 43. That is to say, all pixels are put in an initial state during the reset period.

During the reset period, a control signal requesting the driver 45 to put the modulation layer 8 in an initial state is supplied from the 3rd control line 48 to the driver 45. The driver 45 restores the entire modulation layer 8 to an initial state in accordance with the control signal. The modulation layer 8 can be reset typically by applying an electric field to the modulation layer 8 in a direction opposite to an electric field applied immediately before. It should be noted that the operation needs to be carried out only on portions of the modulation layer 8 that are not in an initial state. That is to say, during the reset period, only the drivers 45 corresponding to pixels not in an initial state need to be driven.

After all the pixels have been restored to an initial state as described above, the optical spatial modulation device 3 enters a transfer period. In the transfer period, a control signal from the 1st control line 46 is supplied to each of the 1st gates 42, opening the 1st gates 42. As a result, pixel data is transferred from the 1st memories 41 to the 2nd memories 43 as a batch. That is to say, much like the 1st and 2nd examples, during the transfer period, all pixel data of an image to be displayed next is transferred from the 1st memories 41 to the 2nd memories 43 as a batch.

Then, after all the pixel data has been transferred from the 1st memories 41 to the 3rd memories 43 as a batch, the optical spatial modulation device 3 again enters a light emit period in which the light source 1 is turned on and, at the same time, in the beginning of the light emit period, a control signal is supplied to the 2nd gate 44 from the 2nd control line 47 to put the 2nd gate 44 in an open state. As the 2nd gate 44 is opened by this control signal, pixel data is supplied to the driver 45 from the 2nd memory 43 to drive the driver 45.

At that time, the 2nd gate 44 is put in an open state for a period of time required for driving the driver 45 to put the modulation layer 8 in a driven state. The driver 45 is driven while the 2nd gate 44 is in the open state. As the open state of the 2nd gate 44 is ended, the driving of the driver 45 is also terminated as well. In the case of the present example, since the modulation layer 8 has a state storing characteristic, a pixel driven by the driver 45 into a driven state remains in the driven state as it is even after the driving of the driver 45 is ended.

It should be noted that the drivers 45 are driven only for pixels corresponding to portions of the modulation layer 8 that need to be put in a driven state. That is to say, it is not necessary to drive the drivers 45 for pixels corresponding to portions of the modulation layer 8 that are allowed to remain in an initial state as they are. Thus, it is necessary to drive the drivers 45 only for pixels corresponding to portions of the modulation layer 8 that need to be put in a driven state. In other words, in this optical spatial modulation device 3, when changing a displayed image, only the states of pixels requiring a change in state are changed from an initial state.

In an embodiment like the one described above, pixels in a driven state are reset as a batch, allowing the response speed to be increased without entailing a decrease in frame rate observed in the 2-field technique. In addition, the number of electric charge transfers is small in comparison with the 2-field technique, allowing the amount of consumed power to be reduced.

### Embodiment of the invention

In an embodiment of the invention, a light modulation material having a state storing characteristic such as the FLC and the PDLC is used as a material of the modulation layer 8. When the screen is changed from one image to another, only pixels involved in the screen change are updated.

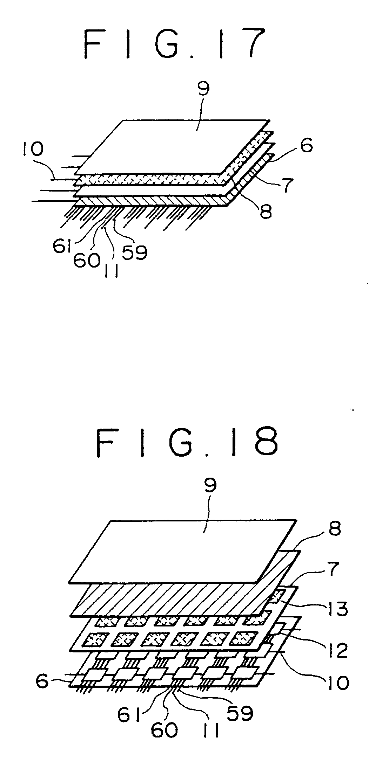

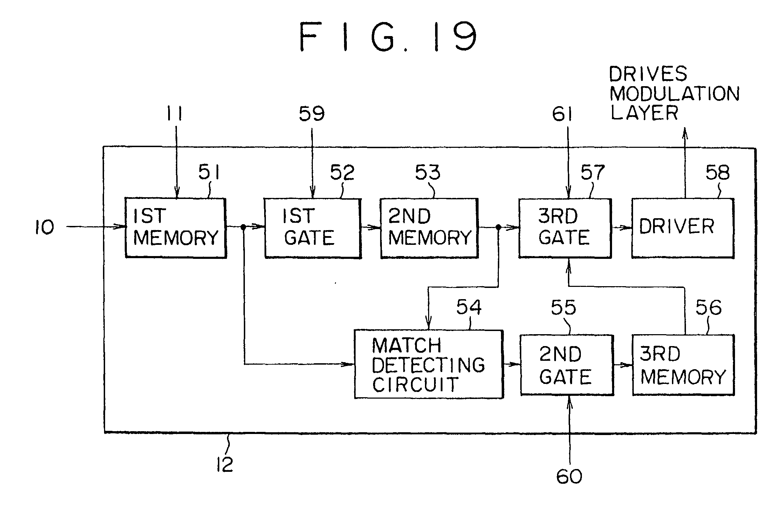

In the embodiment, 1st control lines 59, 2nd control lines 60 and 3rd control lines 61 are created on the driving layer 6 of the optical spatial modulation device 3 as shown in Figs. 17 and 18 and each of the memory cells 12 of the optical spatial modulation device 3 is designed to comprise a 1st memory 51, a 1st gate 52, a 2nd memory 53, a match detecting circuit 54, a 2nd gate 55, a 3rd memory 56, a 3rd gate 57 and a driver 58 as shown in Fig. 19.

The 2nd memory 53 employed in the memory cell 12 is used for storing pixel data of an image being displayed. On the other hand, pixel data of an image to be displayed next is written into the 1st memory 51. The 3rd memory 56 is used for storing information indicating whether or not pixel data of an image being displayed matches pixel data of an image to be displayed next. Such information is referred to hereafter as match indicating data.

The 1st memory 51 is connected to the scanning line 10 and the data line 11. Input signals coming from the scanning line 10 and the data line 11 cause pixel data for the memory cell 12 connected to the scanning line 10 and the data line to be written into the 1st memory 51 of the memory cell 12. To put it concretely, in order to display an image, data of each pixel for indicating whether a portion of the modulation layer 8 corresponding to the pixel is to be put in an initial state or a driven state is written into the 1st memory 51 of the memory cell 12 corresponding to the portion of the modulation layer 8.

Provided between the 1st and 2nd memories 51 and 53, the 1st gate 52 is controlled into closed and open states by a control signal supplied by the 1st control line 59. When the 1st gate 52 is put in an open state by the control signal from the 1st control line 59, pixel data stored in the 1st memory 51 is transferred to the 2nd memory 53.

Pixel data stored in the 1st memory 51 is transferred to the 2nd memory 53 by way of the 1st gate 52. As described above, the 2nd memory 53 is used for holding pixel data of an image being displayed.

The match detecting circuit 54 compares pixel data stored in the 1st memory 51 with pixel data stored in the 2nd memory 53 to form a judgement as to whether or not both the pieces of pixel data match each other. As described above, the 2nd memory 53 employed in the memory cell 12 is used for storing pixel data of an image being displayed while pixel data of an image to be displayed next is stored into the 1st memory 51. That is to say, the match detecting circuit 54 forms a judgement as to whether or not pixel data of a current image prior to the operation matches pixel data of an image replacing the current image and outputs match indicating data which shows whether or not pixel data of an image being displayed matches pixel data of an image to be displayed next.

Provided between the 3rd memory 56 and the match detecting circuit 54, the 2nd gate 55 is controlled into closed and open states by a control signal supplied by the 2nd control line 60. When the 2nd gate 55 is put in an open state by the control signal from the 2nd control line 60, match indicating data stored in the match detecting circuit 54 is transferred to the 3rd memory 56.

Match indicating data stored in the match detecting circuit 54 is transferred to the 3rd memory 56 by way of the 2nd gate 55. Thus, an operation to change the current image being displayed is carried out by resorting to the 3rd memory 56 which is used for storing match indicating data showing whether or not pixel data of the current image prior to the operation matches pixel data of an image replacing the current image.

Provided between the 2nd and 3rd memories 53 and 56 and the driver 58, the 3rd gate 57 is controlled into closed and open states by a control signal supplied by the 3rd control line 61. When the 3rd gate 57 is put in an open state by the control signal from the 3rd control line 61, pixel data stored in the 2nd memory 53 and match indicating data stored in the 3rd memory 56 is transferred to the driver 58.

The driver 58 is driven in accordance with the pixel data supplied from the 2nd memory 53 by way of the 3rd gate 57 and the match indicating data supplied from the 3rd memory 56 by way of the 3rd gate 57. In an operation to change a currently displayed image, the driver 58 drives only portions of the modulation layer 8 corresponding to pixels for which pixel data of the current image prior to the operation does not match pixel data of an image replacing the current image.

To put it in detail, in an operation to change a currently displayed image, the driver 58 of a memory cell 12 corresponding to a pixel applies an electric field to a portion of the modulation layer 8 corresponding to the pixel in order to put the pixel in a driven state only if the pixel data supplied from the 2nd memory 53 is data requesting that the pixel be put in a driven state and the match indicating data supplied from the 3rd memory 56 shows that pixel data of the current image prior to the operation does not match pixel data of an image replacing the current image.

By the same token, in the case of another pixel to be put in an initial state in an operation to change a currently displayed image, the driver 58 of the pixel may apply an electric field to a portion of the modulation layer 8 corresponding to the pixel in order to put the pixel in an initial state only if the pixel data supplied from the 2nd memory 53 is data requesting that the pixel be put in an initial state and the match indicating data supplied from the 3rd memory 56 shows that pixel data of the current image prior to the operation does not match pixel data of an image replacing the current image.

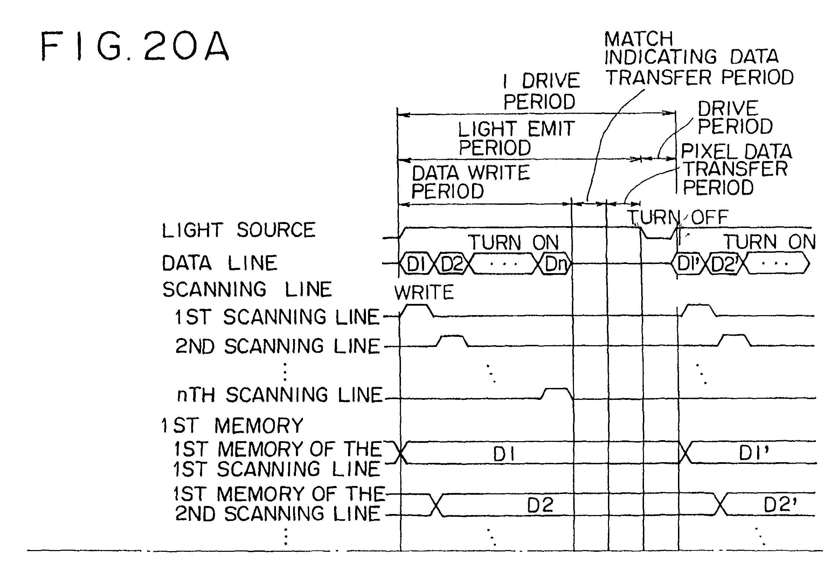

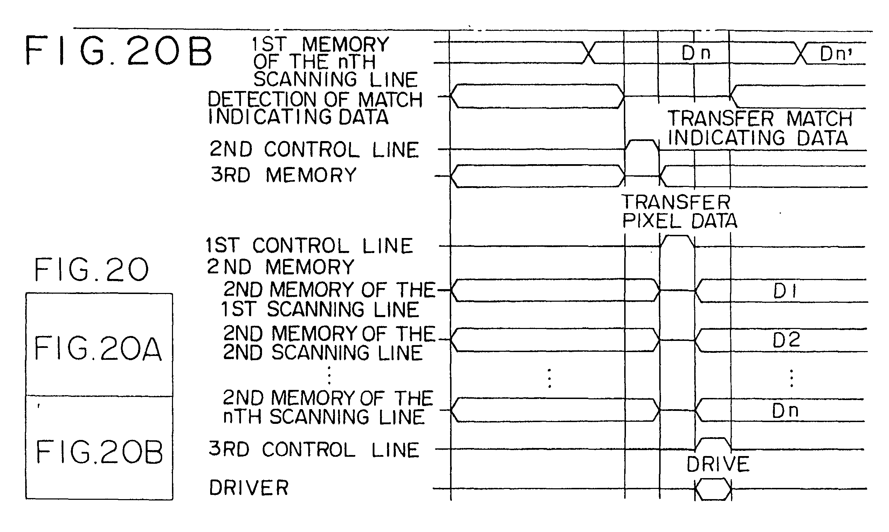

The following is a description of a driving method adopted in the image display apparatus employing the optical spatial modulation device 3, on which a memory cell 12 described above is created for each pixel, by referring to timing charts shown in Fig. 20.

As shown in Fig. 20, a period required for displaying an image comprises a light emit period and a drive period. The light emit period comprises a data write period, a match indicating data transfer period and a pixel data transfer period. The light emit period is a period during which the light source 1 is turned on and an image is displayed on the screen 5. On the other hand, the drive period is a period during which the driver 58 is driven to change the state of a pixel corresponding to the driver 58. During the drive period, the light source 1 is turned off.

The data write period of the light emit period is a period during which all pixel data of an image to be displayed next is stored in the 1st memory 51 as is the case with the light emit period of the 1st to 3rd embodiments. At that time, the match detecting circuit 54 compares pixel data stored in the 2nd memory 53, that is, pixel data of an image currently being displayed, with pixel data stored in the 1st memory 51, that is, pixel data of an image to be displayed next.

As the operation to store all the pixel data of an image to be displayed next in the 1st memory 51 is completed, the optical spatial modulation device 3 enters the match indicating data transfer period during which a control signal is supplied to the 2nd gate 55 from the 2nd control line 60 to put the 2nd gate 55 in an open state. As a result, match indicating data is transferred from the match detecting circuit 54 to the 3rd memory 56 as a batch.

As the operation to transfer the match indicating data from the match detecting circuit 54 to the 3rd memory 56 is completed, the optical spatial modulation device 3 enters the pixel data transfer period during which a control signal is supplied to the 1st gate 52 from the 1st control line 59 to put the 1st gate 52 in an open state. As a result, pixel data to be displayed next is transferred from the 1st memory 51 to the 2nd memory 53 as a batch.

As the operation to transfer the pixel data from the 1st memory 51 to the 2nd memory 53 is completed, the optical spatial modulation device 3 enters the drive period during which a control signal is supplied to the 3rd gate 57 from the 3rd control line 61 to put the 3rd gate 57 in an open state. As a result, pixel data is transferred from the 2nd memory 53 to the driver 58 and match indicating data is transferred from the 3rd memory 56 to the driver 58. Receiving the pixel data and the match indicating data, the driver 58 drives the portion of the modulation layer 8 to a state indicated by the pixel data only if the match indicating data shows that pixel data of an image currently being displayed prior to the image change is different from pixel data of a replacing image to be displayed next as described above. That is to say, only the drivers 58 for pixels that need to be rewritten drive the portions of the modulation layer 8 corresponding to the pixels during the drive period.

The drive period corresponds to a period of time required by the driver 58 for changing the state of a pixel. In other words, a driver 58 that needs to be driven in an operation to change a displayed image is driven during a period of time corresponding to the drive period. Much like the 3rd example, the present embodiment employs a modulation layer 8 which has a state storing characteristic. Thus, once the driver 58 is driven for a fixed period of time in this way, a pixel with the state thereof changed by the driving of the driver 58 sustains the state even after the driving of the driver 58 is ended immediately.

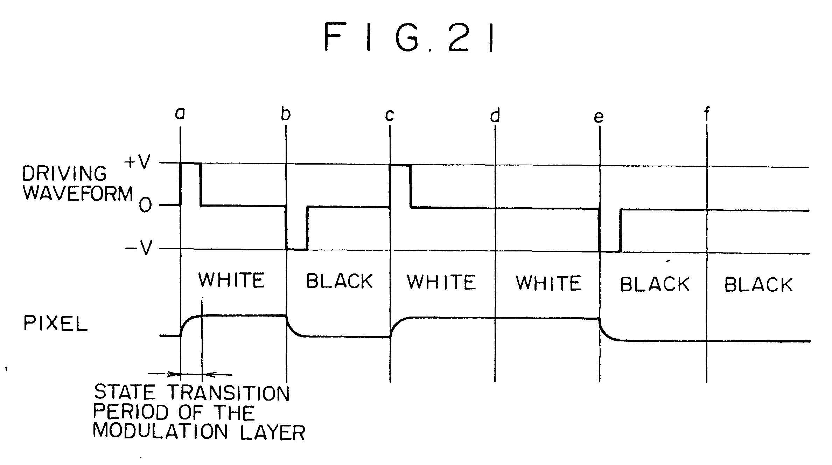

Fig. 21 is a diagram showing a typical waveform of a driving signal of the driver 58 for changing the colour of a pixel in accordance with images to be displayed in the following order: white, black, white, white, black and black. The driver 58 is driven only in periods at points of time denoted by symbols a, b, c and e in Fig. 21 but not in periods at points of time denoted by symbols d and f. It is obvious from the figure that the driver 58 is driven only if the pixel data of an image prior to the operation to change the screen is different from pixel data of the replacing image. In other cases, the state of the pixel is sustained as it is.

In the case of the present embodiment, when changing a displayed image, only pixels involved in the change are rewritten as a batch as described above. As a result, the time required to rewrite the pixels can be reduced to a minimum and the light utilisation rate of the optical spatial modulation device can be increased substantially. In addition, since only a required minimum number of pixels are rewritten, the number of transfers of electric charge accompanying the operation to rewrite the pixels can also be decreased to a minimum, allowing the amount of electric power required for driving the optical spatial modulation device to be reduced considerably.

It is obvious from the timing charts shown in Fig. 20 that the operation to store pixel data in the 1st memory 51 is started at the beginning of the light emit period. It should be noted, however, that the operation to store pixel data in the 1st memory 51 can also be carried out upon completion of the transfer of pixel data to the 2nd memory 53. That is to say, the operation to store pixel data in the 1st memory 51 can also be carried out during the transfer period. An operation to store pixel data in the 1st memory 51 during a transfer period is effective when it is desired to shorten the time to display 1 image.

As has been described above in detail, since the optical spatial modulation device provided by the present invention includes a plurality of memories for each pixel, an image can be rewritten with a high degree of efficiency. That is to say, the response speed of the optical spatial modulation device provided by the present invention can be increased substantially.

In addition, since the image display apparatus provided by the present invention employs an optical spatial modulation device having a plurality of memories for each pixel, an image can be rewritten with a high degree of efficiency. That is to say, the response speed of the image display apparatus provided by the present invention can be increased substantially. In addition, since the light emit period can be lengthened, a very high intensity can be obtained.

## Claims

1. A reflection type optical modulation device formed by sequentially stacking a drive layer (6), a reflection layer(7), a liquid crystal layer (8) and a common electrode (9), **characterised in that** said drive layer comprises for each pixel of an image to be displayed:
a 1st memory (21) for storing pixel data of an image to be displayed;
a 2nd memory (23) to which pixel data stored in said 1st memory (21) is transferred; and
a driving means (24) for driving said liquid crystal layer in accordance with pixel data transferred to said 2nd memory (23),
wherein, in an operation to display an image on said reflection type optical modulation device,
said pixel data stored in said 1st memory (21) and corresponding to each of all pixels composing said image are transferred to said 2nd memory (23), and said driving means (24) drives said liquid crystal layer in accordance with the pixel data transferred to said 2nd memory, to modulate the radiated light for each of said pixels by said liquid crystal layer, **characterised in** further comprising :
a judgement forming means for forming a judgement as to whether or not a state of each pixel of said displayed image is the same as a state of said pixel of said image to be displayed anew prior to said operation to change said displayed image; and
a 3rd memory (56) for storing a result of said judgement formed by said judgement forming means,

2. The reflection type optical modulation device according to claim 1 wherein each of said pixels can be put in a 1st state with an optical transmissivity, an optical reflectance or a polarisation state, or a 2nd state with an optical transmissivity, an optical reflectance or a polarisation state different from that of said 1st state by control executed by said driving means (24) for said pixel.

3. The reflection type optical modulation device according to claim 1 wherein said driving means (24) for all said pixels change states of all said pixels in a batch operation.

4. The reflection type optical modulation device according to claim 1 wherein said driving means (24) for all said pixels change states of all said pixels at predetermined intervals.

5. The reflection type optical modulation device according to claim 1 wherein, in an operation to change a displayed image, first of all, said driving means (24) for all said pixels put all said pixels in an initial state by erasing said displayed image and then change states of said pixels in accordance with an image to be displayed anew.

6. The reflection type optical modulation device according to claim 1 wherein, in an operation to change a displayed image, only states of pixels, states of which need to be changed, are changed by said driving means (58) in accordance with said result of said judgement stored in said 3rd memory (56).

7. The reflection type optical modulation device according to claim 1 wherein each of said pixels uses a liquid crystal material and, by changing a state of said liquid crystal material, an optical transmissivity, an optical reflectance or a polarisation state of said pixel can be changed.

8. The reflection type optical modulation device according to claim 7 wherein said liquid crystal material is a liquid crystal material having a mode with a state storing characteristic.

9. The reflection type optical modulation device according to claim 8 wherein said liquid crystal material is a ferroelectric liquid crystal material or a polymer diffused liquid crystal.

10. The reflection type optical modulation device according to claim 1 wherein each of said pixels is capable of storing a state with an optical transmissivity, an optical reflectance or a polarisation state changed.

11. An image display apparatus comprising a light source (1) for radiating a light and an optical modulation device (3) according to any one of claims 1 to 10.

## Patentansprüche

1. Optischer Reflexions-Modulator, der durch aufeinander Stapeln einer Ansteuerungslage (6), einer Reflexionslage (7), einer Flüssigkristall-Lage (8) und einer gemeinsamen Elektrode (9) gebildet ist, **dadurch gekennzeichnet, dass** die Ansteuerungslage für jeden Pixel eines anzuzeigenden Bildes aufweist:
einen ersten Speicher (21) zum Speichern von Pixeldaten eines anzuzeigenden Bildes;
einen zweiten Speicher (23), dem die in dem ersten Speicher (21) gespeicherten Pixeldaten übertragen werden; und
eine Ansteuerungsvorrichtung (24) zum Ansteuern der Flüssigkristall-Lage entsprechend dem zweiten Speicher (23) übertragenen Pixeldaten,
wobei die in dem ersten Speicher (21) gespeicherten und sämtlichen das Bild zusammensetzenden Pixeln entsprechenden Pixeldaten zu dem zweiten Speicher (23) übertragen werden und die Ansteuerungsvorrichtung (24) die Flüssigkristall-Lage entsprechend den dem zweiten Speicher übertragenen Pixeldaten ansteuert, um das für jeden der Pixel durch die Flüssigkristall-Lage abgestrahlte Licht zu modulieren,
weiter **gekennzeichnet durch**
eine Beurteilungseinrichtung zum Bilden eines Urteils, ob ein Zustand jedes Pixels des angezeigten Bildes der gleiche ist wie ein Zustand des Pixels des neu anzuzeigenden Bildes, vor dem Prozess der Änderung des angezeigten Bildes; und
einen dritten Speicher (56) zum Speichern eines Ergebnisses der **durch** die Beurteilungseinrichtung gebildeten Beurteilung.

2. Optischer Reflexions-Modulator nach Anspruch 1, wobei jeder der Pixel durch eine durch die Ansteuerungsvorrichtung (24) für das Pixel ausgeführte Ansteuerung in einen ersten Zustand mit einer spezifischen Lichtdurchlässigkeit, einem optischen Reflexionsvermögen oder einem Polarisationszustand, oder einen zweiten Zustand mit einer spezifischen Lichtdurchlässigkeit, einem optischen Reflexionsvermögen oder einem Polarisationszustand, die sich von denjenigen des ersten Zustands unterscheiden, versetzt werden kann.

3. Optischer Reflexions-Modulator nach Anspruch 1, wobei die Ansteuerungsvorrichtungen (24) für sämtliche Pixel die Zustände aller Pixel in einer Stapelfunktion verändern.

4. Optischer Reflexions-Modulator nach Anspruch 1, wobei die Ansteuerungsvorrichtungen (24) für sämtliche Pixel die Zustände aller Pixel in vorgegebenen Intervallen verändern.

5. Optischer Reflexions-Modulator nach Anspruch 1, wobei bei einem Prozess zur Änderung eines angezeigten Bildes zuallererst die Ansteuerungsvorrichtungen (24) für sämtliche Pixel durch Löschen des angezeigten Bildes alle Pixel in einen Ausgangszustand versetzen und dann die Zustände der Pixel entsprechend einem neu anzuzeigenden Bild verändern.

6. Optischer Reflexions-Modulator nach Anspruch 1, wobei bei einem Prozess zur Änderung eines angezeigten Bildes gemäß dem Ergebnis der in dem dritten Speicher (56) gespeicherten Beurteilung nur Zustände von Pixeln, deren Zustände verändert werden müssen, durch die Ansteuerungsvorrichtungen (58) verändert werden.

7. Optischer Reflexions-Modulator nach Anspruch 1, wobei jeder der Pixel ein Flüssigkristallmaterial benutzt und durch Verändern eines Zustandes des Flüssigkristallmaterials eine spezifische Lichtdurchlässigkeit, ein optisches Reflexionsvermögen oder ein Polarisationszustand des Pixels verändert werden kann.

8. Optischer Reflexions-Modulator nach Anspruch 7, wobei das Flüssigkristallmaterial ein Flüssigkristallmaterial eine Betriebsart mit einer Zustandspeicher-Eigenschaft besitzt.

9. Optischer Reflexions-Modulator nach Anspruch 8, wobei das Flüssigkristallmaterial ein ferroelektrisches Flüssigkristallmaterial oder ein in Polymer dispergierter Flüssigkristall ist.

10. Optischer Reflexions-Modulator nach Anspruch 1, wobei jeder der Pixel in der Lage ist, einen Zustand mit einer veränderten spezifischen Lichtdurchlässigkeit, einem veränderten optischen Reflexionsvermögen oder einem veränderten Polarisationszustand zu speichern

11. Bildanzeigevorrichtung mit einer Lichtquelle (1) zum Aussenden von Licht und einem optischen Modulator (3) nach einem der Ansprüche 1 bis 10.

## Revendications

1. Dispositif de modulation optique du type à réflexion formé en empilant séquentiellement une couche de commande (6), une couche de réflexion (7), une couche de cristaux liquides (8) et une électrode commune (9), **caractérisé en ce que** ladite couche de commande comprend pour chaque pixel d'une image devant être affichée :
une première mémoire (21) destinée à mémoriser des données de pixel d'une image devant être affichée,
une seconde mémoire (23) vers laquelle des données de pixel mémorisées dans ladite première mémoire (21) sont transférées, et
un moyen de commande (24) destiné à commander ladite couche de cristaux liquides conformément à des données de pixel transférées vers ladite seconde mémoire (23),
dans lequel, lors d'une opération destinée à afficher une image sur ledit dispositif de modulation optique du type à réflexion,
les données de pixel mémorisées dans ladite première mémoire (21) et correspondant à chacun de tous les pixels composant l'image sont transférées vers ladite seconde mémoire (23), et ledit moyen de commande (24) commande la couche de cristaux liquides conformément aux données de pixel transférées vers ladite seconde mémoire, afin de moduler la lumière rayonnée pour chacun des pixels par la couche de cristaux liquides, **caractérisé en ce que** ledit dispositif comprend en outre :
un moyen d'évaluation destiné à évaluer si l'état de chaque pixel de ladite image affichée est le même ou non que l'état du pixel de l'image devant être de nouveau affichée avant l'opération de changement de l'image affichée, et
une troisième mémoire (56) destinée à mémoriser un résultat de ladite évaluation élaborée par ledit moyen d'évaluation.

2. Dispositif de modulation optique du type à réflexion selon la revendication 1, dans lequel chacun desdits pixels peut être placé dans un premier état avec un facteur de transmission optique, un facteur de réflexion optique ou un état de polarisation, ou bien un second état avec un facteur de transmission optique, un facteur de réflexion optique ou un état de polarisation différents de ceux dudit premier état grâce à une commande exécutée par ledit moyen de commande (24) pour ledit pixel.

3. Dispositif de modulation optique du type à réflexion selon la revendication 1, dans lequel ledit moyen de commande (24) pour tous lesdits pixels, change les états de tous lesdits pixels dans une opération regroupée.

4. Dispositif de modulation optique du type à réflexion selon la revendication 1, dans lequel ledit moyen de commande (24) pour tous lesdits pixels, change les états de tous lesdits pixels à des intervalles prédéterminés.

5. Dispositif de modulation optique du type à réflexion selon la revendication 1, dans lequel, dans une opération destinée à modifier une image affichée, tout d'abord, ledit moyen de commande (24) pour tous lesdits pixels place tous lesdits pixels dans un état initial en effaçant ladite image affichée et change ensuite les états desdits pixels conformément à une image devant être à nouveau affichée.

6. Dispositif de modulation optique du type à réflexion selon la revendication 1, dans lequel, dans une opération destinée à modifier une image affichée, seuls les états des pixels, dont les états ont besoin d'être modifiés, sont modifiés par ledit moyen de commande (58) conformément audit résultat de ladite évaluation mémorisé dans ladite troisième mémoire (56).

7. Dispositif de modulation optique du type à réflexion selon la revendication 1, dans lequel chacun desdits pixels utilise un matériau de cristaux liquides et, en modifiant un état dudit matériau de cristaux liquides, un facteur de transmission optique, un facteur de réflexion optique ou un état de polarisation dudit pixel peut être modifié.

8. Dispositif de modulation optique du type à réflexion selon la revendication 7, dans lequel ledit matériau de cristaux liquides est un matériau de cristaux liquides présentant un mode ayant une caractéristique de mémorisation d'état.

9. Dispositif de modulation optique du type à réflexion selon la revendication 8, dans lequel ledit matériau de cristaux liquides est un matériau de cristaux liquides ferroélectriques ou bien des cristaux liquides diffusés polymères.

10. Dispositif de modulation optique du type à réflexion selon la revendication 1, dans lequel chacun desdits pixels peut mémoriser un état présentant un facteur de transmission optique, un facteur de réflexion optique ou un état de polarisation modifié.

11. Dispositif d'affichage d'image comprenant une source de lumière (1) destinée à faire rayonner de la lumière et un dispositif de modulation optique (3) selon l'une quelconque des revendications 1 à 10.
